# DEMANDE DE BREVET EUROPEEN

(11) **EP 4 261 447 A1**
(43) Date de publication de la demande: **18.10.2023**
(21) Numéro de dépôt: 23167351.8
(22) Date de dépôt: 11.04.2023
(51) Int. Cl.: F16L 5/02, F16L 5/06, F16L 5/10, H02G 3/22, B29C 44/12, F16L 59/12, F24H 1/18, F24H 9/13, F28D 20/00, H02G 15/013

(54) **DISPOSITIF DE PASSAGE POUR UN CONDUIT À TRAVERS UNE PAROI ET CONTENANT COMPORTANT UN TEL DISPOSITIF**

(30) Priorité: 13.04.2022 FR 2203406
(71) Demandeur: Viessmann Climate Solutions SE, 35108 Allendorf (DE)
(72) Inventeur: SCHILLER, Manuel, 57385 TRITTELING REDLACH (FR)
(74) Mandataire: Cabinet Nuss

(57) **Abrégé**

L'invention concerne un dispositif de passage pour conduit (2) destiné à être monté dans une ouverture (3) d'une paroi (4) présentant des faces interne et externe opposées et sur l'extrémité (2') dudit conduit, ledit dispositif comprenant un premier corps annulaire extérieur (5) et un deuxième corps annulaire intérieur (6) configurés pour être montés concentriquement sur l'extrémité du conduit (2) et pour réaliser un pincement de la paroi (4) entre eux.

Ce dispositif de passage est caractérisé en ce que le premier corps annulaire (5) comprend une partie radialement intérieure (5") en forme de manchon avec une région profilée (7) sur sa face interne, en ce que le deuxième corps annulaire (6) comprend une partie radialement intérieure (6") en forme de manchon avec une région profilée (8) sur sa face externe, ces deux régions (7 et 8) coopérant mutuellement avec chevauchement pour réaliser l'assemblage par engagement positif des deux corps annulaires (5 et 6), et en ce que ledit manchon intérieur (6") du deuxième corps annulaire (6) comprend des portions de paroi (9) élastiquement déformables, lesquelles sont sollicitées pour venir en engagement bloquant ou verrouillant avec le conduit (2) à l'état assemblé des deux corps annulaires (5 et 6).

## Description

La présente invention concerne le domaine des dispositifs de passage pour conduits ou analogue traversant une paroi ou une interface similaire, en particulier dans le contexte des biens d'équipement, en particulier les équipements domestiques et industriels en lien avec le stockage de liquide chaud ou froid, et notamment les réservoirs d'eau chaude, par exemple de chauffe-bains ou chauffeeaux à accumulation.

Dans ce contexte, l'invention a pour objet un dispositif de passage étanche pour conduit à travers une paroi, un contenant isolé thermiquement, notamment un ballon d'accumulation d'eau chaude, comportant au moins un tel dispositif et un procédé de fabrication d'un tel contenant.

De nombreuses constructions de tels contenants sont déjà connues de l'état de la technique.

Généralement, ils comprennent essentiellement un réservoir cylindrique, préférentiellement métallique, une paroi (généralement cylindrique) entourant ledit réservoir et formant enveloppe d'habillage, des couvercles ou capots de fermeture supérieur et inférieur obturant les ouvertures opposées de ladite enveloppe cylindrique et un matériau isolant moussé remplissant sensiblement tout le volume interstitiel entre le réservoir et l'enveloppe avec ses deux couvercles, le couvercle inférieur étant généralement équipé de pieds destinés à supporter le contenant après installation.

Bien entendu, ce contenant est également équipé de conduits de raccordement, notamment de lignes ou d'embouts d'alimentation en liquide, d'évacuation de liquide, de capteur de température, éventuellement de détecteur de niveau, d'évents, de trop-pleins ou d'accessoires analogues en fonction de sa nature et de son application. En outre, ce contenant peut aussi intégrer une résistance chauffante avec son électronique de commande et sa connectique (câble), lorsqu'il s'agit d'un contenant de chauffe-eau électrique, le câble d'alimentation pouvant passer par un conduit du type précité.

Le plus souvent le réservoir présente une forme cylindrique avec des calottes supérieure et inférieure en forme de dômes hémisphériques aplatis.

Une région problématique dans ces constructions de contenants isolés par un produit moussé est celle correspondant à chaque passage d'un conduit ou analogue à travers la paroi de l'enveloppe d'habillage. En effet, à ces endroits il y a lieu d'assurer une parfaite étanchéité vers l'extérieur vis-à-vis de la mousse polyuréthane en expansion et, pour ce faire, il est connu de mettre en place des dispositifs de passage spécifiques (des passe-conduits) pour éviter que la mousse ne s'expanse vers l'extérieur à travers l'ouverture considérée et constitue des formations aléatoires inesthétiques sur la face externe de la paroi autour de l'ouverture.

Ces dispositifs de passage remplissent avantageusement également, en plus de leur fonction première d'étanchéité, une ou plusieurs autres fonctions additionnelles, comme par exemples :
- une fonction esthétique pour améliorer l'aspect visuel extérieur au niveau de l'interface entre l'extrémité débouchante du conduit considéré et la face externe de la paroi ;
- une fonction de centrage du conduit par rapport au trou de passage et une fonction de positionnement indexé du réservoir dans l'enveloppe (le cas échéant en coopération avec d'autres moyens/composants en contact avec le réservoir) avant la phase de moussage (pour obtenir une couche de mousse uniforme autour du réservoir) ;
- une fonction de maintien en position relative du réservoir par rapport à l'enveloppe par le biais des conduits de raccordement dudit réservoir (surtout lors du moussage), et/ou, une fonction de protection temporaire des filets de raccordement des extrémités filetées des conduits et d'obturation des ouvertures de sortie/entrée desdits conduits, avant l'installation des équipements sur site.

En outre, ces dispositifs ne devraient pas défavoriser, voire surtout ne pas empêcher, l'expansion de la mousse autour du conduit (éviter la création de volumes vides de mousse, donc les phénomènes de condensation), en particulier à proximité de la face interne de l'enveloppe, autour de l'ouverture traversante.

On connaît déjà des dispositifs de passage en une ou au moins deux pièces constitutives, montés dans l'ouverture et autour du conduit par clippage ou enclenchement élastique. Bien qu'étant rapides et simples à installer, ils ne permettent aucun réglage, n'autorisent qu'une adaptation très limitée à des variations dimensionnelles des composants ou de leurs positionnements relatifs et ne garantissent pas une liaison suffisamment rigide et résistante avec le conduit.

Une autre variante de dispositifs de passage, mise en oeuvre actuellement par la demanderesse, comprend deux corps annulaires en matière plastique (externe et interne) assemblés mutuellement par vissage de l'un sur l'autre et réalisant un pincement de la paroi entre eux par l'intermédiaire de lèvres circonférentielles flexibles opposées.

Néanmoins, cette solution, bien que remplissant certaines des fonctions précitées et autorisant une adaptation dimensionnelle du fait du vissage, présente également des inconvénients.

Ainsi, la partie interne n'est pas non plus liée de manière suffisamment rigide avec le conduit qui la traverse et peut glisser relativement à ce dernier, en particulier lors de la phase de moussage du fait de la pression générée : le réservoir se retrouvant alors décentré par rapport à l'enveloppe.

Du fait de l'absence de butée de limitation, il peut en outre arriver que l'opérateur réalise un vissage excessif. Dans ce cas, le pas de vis peut être endommagé (l'étanchéité n'est pas réalisée car le pincement n'est pas effectif) et/ou la paroi mince (normalement cintrée cylindrique) de l'enveloppe peut être localement déformée.

Par ailleurs, ces constructions connues de dispositifs de passage sont réalisées entièrement ou essentiellement en matière plastique et ne présentent souvent pas une structure suffisamment rigide pour garantir le maintien en position précis du conduit ou de l'embout concerné lors du moussage.

Enfin, ces constructions connues de dispositifs de passage ne sont pas adaptables et chacune est spécifiquement dédiée à un type d'assemblage de ses parties constitutives (autrement dit, elles ne peuvent être aisément déclinées dans une alternative vissable et une alternative clipsable avec une même structure de base).

La présente invention a pour but de pallier au moins les principaux inconvénients précités.

A cet effet, l'invention a pour objet un dispositif de passage pour conduit, embout ou analogue avec un axe central, destiné à être monté dans une ouverture d'une paroi présentant des faces interne et externe opposées et sur l'extrémité dudit conduit ou analogue qui le traverse, ledit dispositif de passage venant en prise avec ladite paroi autour de ladite ouverture, en étant configuré pour assurer un maintien en position dudit conduit ou analogue dans ladite ouverture et pour obturer cette dernière autour du conduit, ledit dispositif de passage comprenant un premier corps annulaire extérieur et un deuxième corps annulaire intérieur avec des axes médians respectifs, ces deux corps constituant le dispositif de passage par assemblage mutuel avec engagement positif, et étant configurés pour être montés concentriquement, avec confusion des axes et avec maintien, sur l'extrémité du conduit et pour réaliser un pincement de la paroi entre eux, ce par l'intermédiaire de lèvres circonférentielles flexibles respectives, prenant chacune appui sur l'une desdites faces interne et externe de ladite paroi, autour de l'ouverture,
dispositif de passage caractérisé en ce que le premier corps annulaire comprend une partie radialement intérieure en forme de manchon avec une région profilée sur sa face interne, en ce que le deuxième corps annulaire comprend une partie radialement intérieure en forme de manchon avec une région profilée sur sa face externe, ces deux régions coopérant mutuellement avec chevauchement pour réaliser l'assemblage par engagement positif des deux corps annulaires, et en ce que ledit manchon intérieur du deuxième corps annulaire comprend des portions de paroi élastiquement déformables, lesquelles sont sollicitées élastiquement et/ou par le manchon intérieur du premier corps annulaire pour venir en engagement bloquant ou verrouillant avec le conduit à l'état assemblé des deux corps annulaires.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en coupe selon un plan contenant l'axe vertical d'un ballon d'eau chaude, au cours de l'expansion de sa couche de mousse isolante, comportant deux dispositifs de passage selon l'invention (détails A et B), et
[Fig. 2] est une vue en perspective et en coupe partielle selon deux plans mutuellement perpendiculaires contenant son axe médian ou central d'une variante préférée d'un premier mode de réalisation d'un dispositif de passage selon l'invention (détail A ou B de la figure 1 représenté à une échelle différente) ;
[Fig. 3] est une vue partielle en coupe et en élévation, à une échelle différente, de l'objet représenté figure 2 ;
[Fig. 4A] est une vue partielle en coupe et en élévation similaire à celle de la figure 3, illustrant un second mode de réalisation d'un dispositif de passage selon l'invention (détail A ou B de la figure 1 représenté à une échelle différente) ;
[Fig.4B] est une vue partielle en coupe et en élévation illustrant une autre variante du premier mode de réalisation d'un dispositif de passage selon l'invention illustré sur la figure 3 ;
[Fig. 5] est une vue partielle en perspective et à une autre échelle du détail A de la figure 1, montrant un dispositif de passage selon la figure 2 installé sur le contenant ;
[Fig. 6A] et
[Fig. 7A] sont des vues en perspective respectivement du premier corps annulaire et du deuxième corps annulaire formant par assemblage mutuel le dispositif de passage des figures 2 et 3 ;

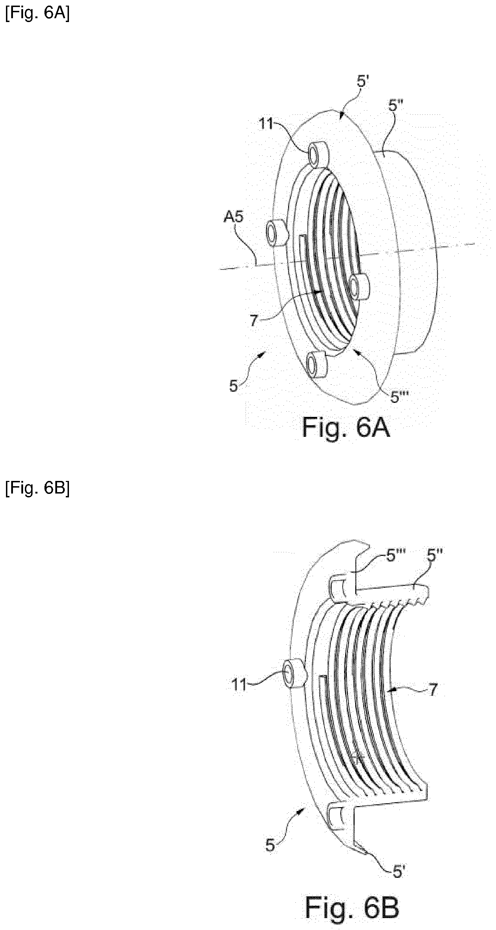

[Fig. 6B] et

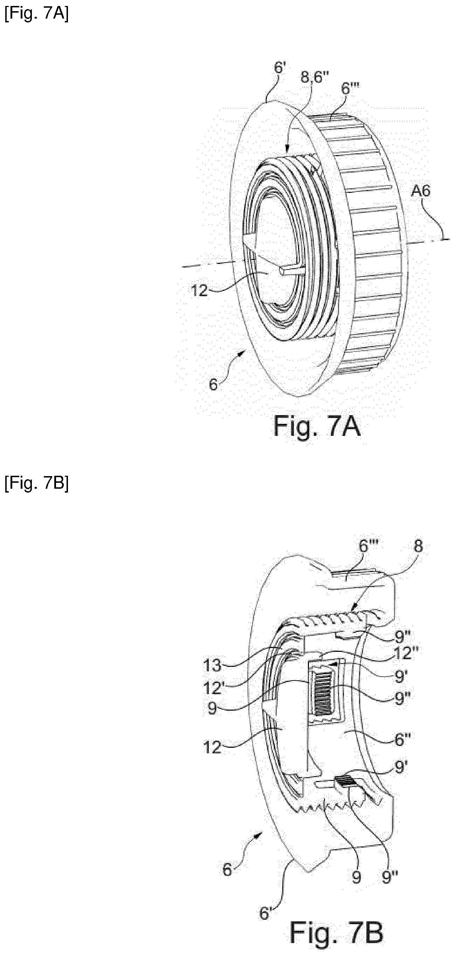

[Fig. 7B] sont des vues en perspective et coupe selon un plan contenant leur axe médian ou central respectivement du premier corps annulaire et du deuxième corps annulaire représentés sur les figures 6A et 7A, et,

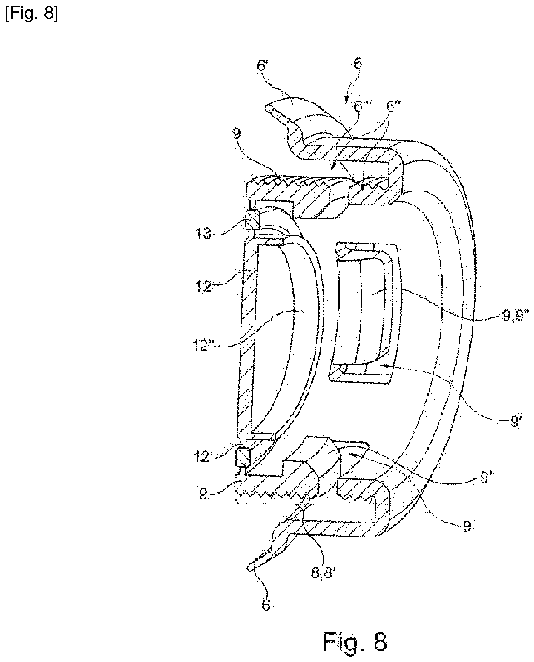

[Fig. 8] illustre une variante de réalisation de l'objet représenté figure 7B.

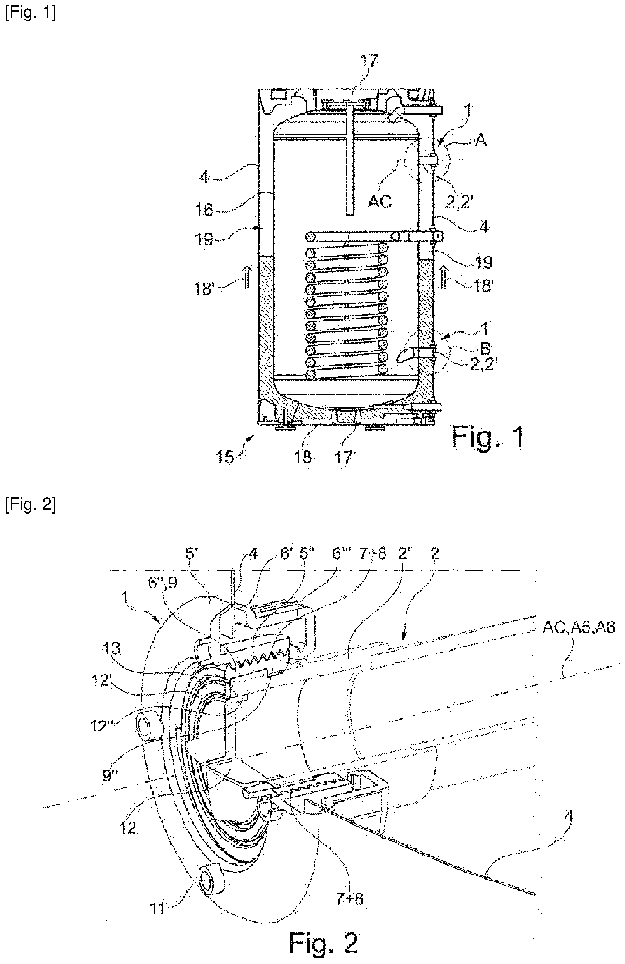

Les figures 2 à 5 montrent, notamment en relation avec la figure 1, un dispositif de passage (1) pour conduit (2), embout ou analogue avec un axe central (AC), destiné à être monté dans une ouverture (3) d'une paroi (4) présentant des faces interne (4') et externe (4") opposées et sur l'extrémité (2') dudit conduit ou analogue (2) qui le traverse.

Ce dispositif de passage (1) vient en prise avec ladite paroi (4) autour de ladite ouverture (3) et est configuré pour assurer un maintien en position dudit conduit ou analogue (2) dans ladite ouverture (3) et pour obturer cette dernière autour du conduit (2).

Ce dispositif de passage (1) comprend, vus selon l'axe (AC) et par rapport à la paroi (4), un premier corps annulaire extérieur (5) et un deuxième corps annulaire intérieur (6) avec des axes médians respectifs (A5 et A6), ces deux corps (5 et 6) constituant le dispositif de passage (1) par assemblage mutuel avec engagement positif, et étant configurés pour être montés concentriquement, avec confusion des axes et avec maintien, sur l'extrémité du conduit (2) et pour réaliser à un pincement de la paroi (4) entre eux, ce par l'intermédiaire de lèvres circonférentielles flexibles (5' et 6') respectives, destinées chacune à prendre appui sur l'une desdites faces interne et externe (4' et 4") de ladite paroi (4), autour de l'ouverture (3).

Conformément à l'invention, le premier corps annulaire (5) comprend une partie radialement intérieure (5") en forme de manchon avec une région profilée (7) sur sa face interne, le deuxième corps annulaire (6) comprend une partie radialement intérieure (6") en forme de manchon avec une région profilée (8) sur sa face externe, ces deux régions (7 et 8) coopérant mutuellement avec chevauchement, lors du montage concentrique du premier corps (5) autour du deuxième corps (6), pour réaliser l'assemblage mutuel par engagement positif réciproque des deux corps annulaires (5 et 6). De plus, ledit manchon intérieur (6") du deuxième corps annulaire (6) comprend des portions de paroi (9) élastiquement déformables, lesquelles sont sollicitées élastiquement et/ou par le manchon intérieur (5") du premier corps annulaire (5) pour venir en engagement bloquant ou verrouillant avec le conduit (2) à l'état assemblé des deux corps annulaires (5 et 6).

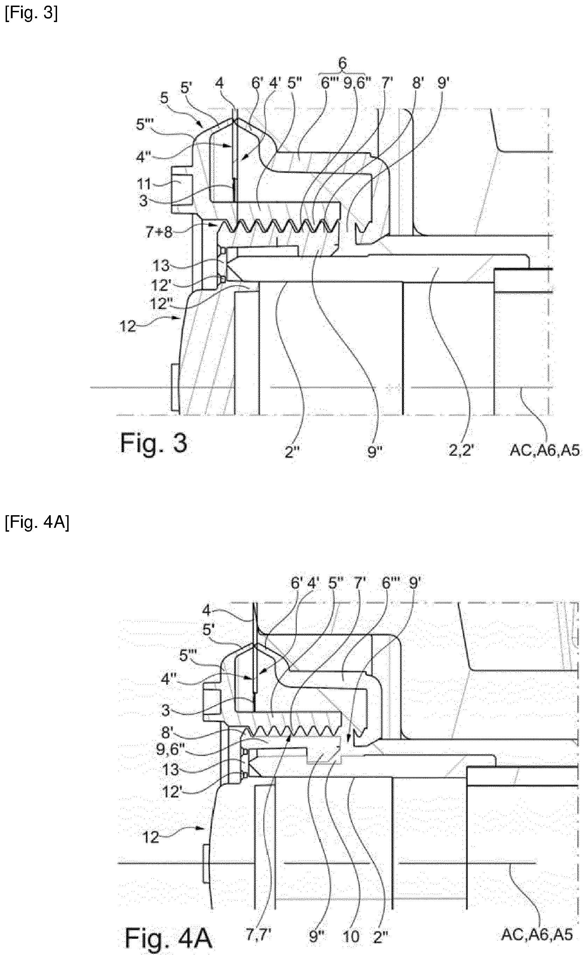

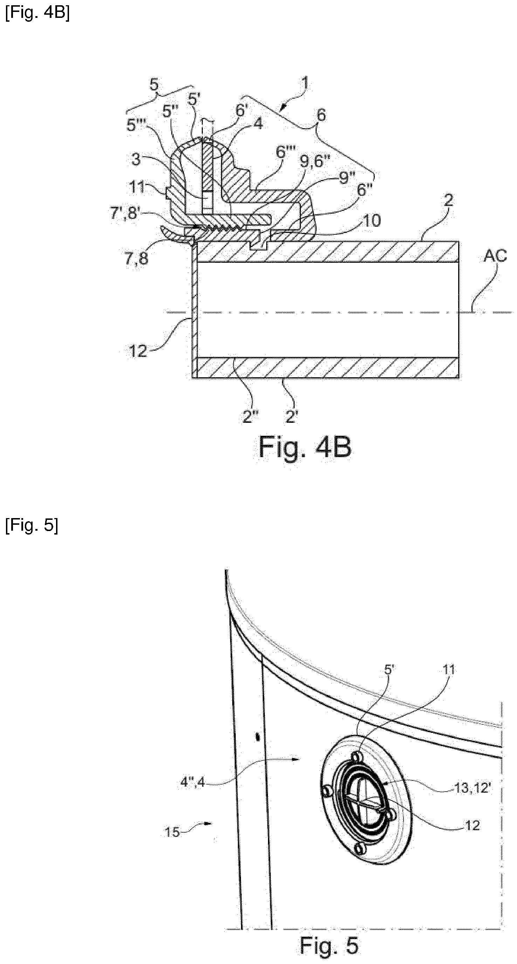

Ainsi, l'invention fournit un dispositif de passage (1) qui n'est composé que de deux parties constitutives et qui, en plus de répondre à la plupart des demandes de fonctionnalités exprimées précédemment (finition esthétique extérieure, centrage du conduit, maintien en position du conduit, obturation de l'ouverture contre l'expansion de la mousse, protection de l'extrémité du conduit), permet aussi un accrochage avec serrage et blocage sur le conduit (donc aussi un ablocage en translation selon l'axe AC sur le conduit). De plus, du fait du chevauchement mutuel des manchons intérieurs (5" et 6") - chevauchement au moins partiel, avantageusement majoritaire, préférentiellement sensiblement total du manchon 6" par le manchon 5" - le dispositif forme autour du conduit une structure à double paroi rigide et résistante (voir figures 3 et 4 notamment).

L'engagement des portions de paroi (9) avec le conduit (2) peut être obtenu, par exemple, soit par serrage (sous l'action d'une sollicitation élastique résultant d'une déformation de ces portions et/ou d'une action du manchon 5 entourant), soit par accrochage (les portions viennent s'encliqueter dans des sites creux ou derrière des sites proéminents présents sur la face externe du conduit), ou encore par une combinaison deux modes précités (clipsage ou encliquetage verrouillé par serrage). Le blocage obtenu par le biais de ces portions de parois (9) entre le dispositif (1) et le conduit (2), et entre ce dernier et la paroi (4), est un blocage en translation et en rotation, le long et autour de l'axe (AC), les autres degrés de liberté étant bloqués par le logement du conduit (2) dans les manchons concentriques (5" et 6") des corps annulaires chevauchants (5 et 6) et leur solidarisation avec la paroi (4) par l'intermédiaire de leur lèvre respectives (5' et 6').

Le dispositif (1) fournit ainsi, par un pincement à effort contrôlé, un montage flottant mais avec maintien ferme du conduit (2) dans l'ouverture (3) de la paroi (2), sans venir en prise directement sur le bord de cette ouverture (3) - les lèvres viennent en appui sur les deux faces de la paroi circonférentiellement autour et à distance de cette ouverture -, avec répartition des efforts d'appui (contact surfacique du fait de l'écrasement des lèvres), faculté d'adaptation à une forme de paroi incurvée (déformabilité élastique des lèvres-adaptation à la forme de la paroi), faculté d'adaptation à des épaisseurs de paroi variées et faculté de rattrapage des tolérances de découpe de l'ouverture.

Préférentiellement, les portions de paroi (9) se présentent sous la forme de portions découpées dans le manchon intérieur (6") avec formation autour d'elles de passages traversants, et consistent avantageusement en des pattes situées dans des ajours (9') de la paroi dudit manchon intérieur (6"), en étant d'un seul tenant avec cette paroi et en étant pourvues de surépaisseurs d'appui ou d'accrochage (9"), préférentiellement au niveau de leurs extrémités libres. Une telle construction permet une fabrication par moulage d'un seul tenant desdites portions de paroi déformables, tout en autorisant un passage de la mousse durant son expansion, pour venir en contact avec le conduit (2).

En accord avec un premier mode de réalisation, ressortant des figures 2, 3, 4B, et 6 à 8, les régions profilées (7 et 8) des parties radialement intérieures (5", 6") respectivement du premier (5) et du deuxième (6) corps annulaires sont des régions filetées, avec préférentiellement une région filetée continue formant la région profilée (7) du premier corps (5) et au moins trois régions filetées intermittentes et réparties circonférentiellement autour de l'axe médian (A6) formant la région profilée (8) du deuxième corps (6), chaque région filetée intermittente (7') étant associée à une des portions de paroi (9) élastiquement déformables. Le vissage du premier corps annulaire (5) pressera les surépaisseurs (9") contre le tube (2) à la manière de mors de serrage.

Ainsi, la force de serrage du conduit (2) dérive de la force de serrage appliquée au premier corps annulaire (5), ce qui permet de la contrôler et aussi de constituer un seuil limitatif pour le vissage (intensité de la résistance au vissage atteignant un niveau maximum, évitant le risque de déformation de la paroi du contenant).

Dans ce premier mode de réalisation, les portions de paroi (9), avantageusement au moins au nombre d'au moins trois, portant chacune une fraction de la région filetée externe (8) du manchon intérieur (6") du deuxième corps annulaire (6) et régulièrement réparties autour de son axe médian (A6), peuvent enserrer sous pression ledit conduit (2) entre elles par l'intermédiaire de surépaisseurs ou de formations protubérantes analogues (9") et sous l'effet d'une déformation élastique provoquée par le manchon intérieur (5") du premier corps annulaire (5) lors du vissage de ce dernier (figure 2 et 3). Dans ce cas, aucun site ou traitement particulier n'est à prévoir sur la face externe du conduit (2).

En accord avec un second mode de réalisation, ressortant de la figure 4A, la région profilée (7) de la partie radialement intérieure (5") du premier corps annulaire (5) comprend au moins trois dents (7'), avantageusement au moins trois groupes de dents (7'), réparties angulairement autour de l'axe médian (A5) et en ce que la région profilée (8) de la partie radialement intérieure (6") du deuxième corps annulaire (6) comprend au moins un cran (8') circonférentiel, lesdites dents (7') et ledit au moins un cran (8') coopérant mutuellement pour réaliser un assemblage par clipsage ou enclenchement élastique des deux corps (5 et 6) lors d'un chevauchement des deux régions profilées (7 et 8).

Ce second mode de réalisation permet un montage rapide du dispositif, sans risque de rayure de la face externe de la paroi (4), et la prévision de groupes de dents (7') successives, réparties suivant l'axe (A5), fournit une pluralité de positions de chevauchement plus ou moins importantes entre les deux pièces annulaires, et donc un ajustement possible, par positions discrètes multiples, de la force de serrage de la paroi (4), ainsi que la faculté de montage du dispositif (1) sur des parois d'épaisseurs et de formes variées.

En relation avec l'un quelconque des premier ou second modes de réalisation ci-dessus, et comme illustré sur les figures 4A et 4B, les portions de paroi (9), avantageusement au moins au nombre de trois, portant le cas échéant chacune une fraction de la région profilée externe (8) du manchon intérieur (6") du deuxième corps annulaire (6) et régulièrement réparties autour de l'axe central (AC) du conduit (2), comportent des surépaisseurs ou des épaulements (9") venant en prise dans une gorge ou rainure (10) présente dans le conduit (2), préférentiellement par enclenchement élastique, le manchon intérieur (5") du premier corps annulaire (5) verrouillant ces engagements lors du vissage ou du clipsage de ce dernier sur le manchon intérieur (6") du deuxième corps annulaire (6). Dans le second mode de réalisation, ce sont les séries de dents (7'), par exemple formées sur des languettes découpées dans la paroi du premier corps annulaire (5), qui appuient sur les portions de paroi (9) pour verrouiller l'engagement des surépaisseurs (9") dans les gorges (10).

Avantageusement, et comme ressortant des figures 2 à 4, le manchon intérieur (6") du deuxième corps annulaire (6) est positionné à distance de la face externe du conduit (2) par l'intermédiaire des surépaisseurs (9") venant en appui sur cette face, autorisant ainsi un contact maximisé entre la mousse en expansion et le conduit (2).

Comme le montrent les figures 2 à 6 à titre d'exemples, et en accord avec une caractéristique de l'invention, le manchon intérieur (5") du premier corps annulaire (5) se prolonge radialement vers l'extérieur par un anneau de recouvrement (5‴) se terminant par la lèvre extérieure (5'), cet anneau de recouvrement (5‴) formant ensemble avec ledit manchon intérieur (5") attenant une structure annulaire avec une section sensiblement en forme de L dans un plan contenant l'axe médian (A5) dudit corps annulaire (5) et comprenant avantageusement des sites ou des formations (11) configurées pour la venue en prise d'un outil de vissage.

Selon une autre caractéristique de l'invention, ressortant des figures 2 à 4 et 7, le deuxième corps annulaire (6) comprend une structure à double paroi, dans laquelle le manchon intérieur (6") se prolonge radialement vers l'extérieur, au niveau de son extrémité intérieure, en un second manchon externe (6‴) concentrique se terminant par la lèvre intérieure (6'), ladite structure présentant sensiblement une section en forme de U dans un plan contenant l'axe médian (A6) dudit deuxième corps annulaire (6) et le manchon intérieur (5") du premier corps annulaire (5) s'étendant entre ces deux manchons concentriques, donc entre les deux branches du U, à l'état assemblé des premier et deuxième corps annulaires du dispositif de passage (1). On aboutit ainsi à un effet élastique supplémentaire lors de l'appui de la lèvre (6') sur la face interne (4') de la paroi (4).

Les lèvres externe (5') et interne (6') forment avantageusement des bandes d'extrémité annulaires, s'effilant en coupe vers leurs bords libres, respectivement de l'anneau de recouvrement (5‴) et d'une aile, parallèle au plan dudit anneau (5') et de la paroi (4), du manchon externe (6‴), les deux ailes précites étant inclinées chacune en direction de ladite paroi (4), respectivement sa face externe ou interne (voir notamment figures 2 à 4).

Afin d'éviter l'introduction par l'extérieur de saletés dans le conduit (2), il peut être prévu (voir figures 2, 5 et 7) que le manchon intérieur (6") du deuxième corps annulaire (6) comporte un opercule (12) fermant l'ouverture d'une de ses extrémités et formant bouchon amovible, destiné à obturer l'ouverture de l'extrémité (2') du conduit (2) lorsque le deuxième corps annulaire (6) est monté sur ledit conduit (2). Cet opercule permet aussi de protéger une éventuelle zone filetée interne (2") de cette extrémité du conduit.

Avantageusement, l'opercule (12) est formé d'un seul tenant avec le manchon intérieur (6") du deuxième corps annulaire (6), en étant relié à ce dernier par une zone de matière annulaire périphérique (12') à rupture privilégiée, par exemple de faible épaisseur, intermittente ou creusée.

Pour éviter que la mousse ne puisse pénétrer dans le conduit (2) par son ouverture extérieure, l'opercule (12) peut comporter une lèvre ou aile circonférentielle intérieure (12"), configurée pour venir en appui sur la face interne de l'extrémité (2') du conduit (2) lorsque le deuxième corps annulaire (6) est monté sur ledit conduit (2).

En vue d'arrêter de manière nette l'emmanchement du deuxième corps annulaire (6) sur le conduit (2) et d'éviter notamment le perçage de l'opercule (12), le manchon intérieur (6") du deuxième corps annulaire (6) peut comporter, au niveau de l'ouverture d'une de ses extrémités, une butée annulaire (13), entourant le cas échéant un opercule (12) de fermeture de cette ouverture et destinée à venir en contact avec le bord de l'extrémité (2') du conduit (2) lorsque le deuxième corps annulaire (6) est monté sur ledit conduit (2).

L'invention concerne également, comme le montre la figure 1, un contenant (15) isolé thermiquement et comprenant essentiellement un réservoir cylindrique (16), préférentiellement métallique, une paroi cylindrique (4) entourant ledit réservoir (16) et formant enveloppe d'habillage, éventuellement des couvercles ou capots de fermeture supérieur (17) et inférieur (17') obturant les ouvertures opposées de ladite enveloppe d'habillage cylindrique (4), et un matériau isolant moussé (18) remplissant sensiblement tout le volume interstitiel (19) entre le réservoir (16) et l'enveloppe (4) avec ses deux éventuels couvercles.

Le réservoir (16) comporte au moins un, préférentiellement plusieurs conduits de raccordement (2), pour l'alimentation et l'évacuation de fluide et/ou l'alimentation en énergie, ces conduits (2) traversant la couche de matériau isolant moussé (18) et la paroi (4) de l'enveloppe d'habillage de cette dernière au niveau d'ouvertures (3) prédécoupées.

Ce contenant (15) est caractérisé en ce qu'un dispositif de passage (1) tel que décrit ci-dessus est présent au niveau d'au moins une, de certaines ou de chacune desdites ouvertures (3) traversées par un conduit (2) correspondant.

Le contenant (15) peut, en particulier mais non limitativement, être un ballon d'eau chaude, associé ou intégré, ou non, à un dispositif de chauffage, de récupération d'énergie ou analogue.

Enfin, l'invention concerne également un procédé de fabrication d'un contenant isolé thermiquement (15) tel qu'évoqué ci-dessus.

Ce procédé consiste essentiellement à fournir un réservoir (16) équipé de ses conduits de raccordement (2), une paroi (4) formant enveloppe d'habillage cylindrique et des couvercles supérieur (17) et inférieur (17'), à placer le réservoir (16) dans l'enveloppe (4) et à mettre en place les couvercles supérieur (17) et inférieur (17'), à installer l'ensemble préassemblé (15, 16, 17, 17') précité dans une station de moussage ou analogue, en la disposant par exemple entre deux plateaux presseurs, à injecter une quantité prédéterminée de mousse liquide (18'), à laisser la mousse s'expanser, de manière à obtenir une couche de matériau isolant moussé (18) dans l'ensemble du volume interstitiel (19) entre, d'une part, le réservoir (16) et, d'autre part, l'enveloppe d'habillage cylindrique (4) avec ses deux couvercles 17 et 17'), et à la laisser se polymériser, et, enfin, à retirer le contenant de la station ou analogue.

Conformément à l'invention, ce procédé consiste également à mettre en place, avant l'injection de la mousse liquide (18'), au niveau d'au moins une, de certaines ou de chacune desdites ouvertures (3) traversées par un conduit (2) correspondant, un dispositif de passage (1) tel que décrit précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de passage (1) pour conduit (2), embout ou analogue avec un axe central (AC), destiné à être monté dans une ouverture (3) d'une paroi (4) présentant des faces interne (4') et externe (4") opposées et sur l'extrémité (2') dudit conduit ou analogue (2) qui le traverse, ledit dispositif de passage (1) venant en prise avec ladite paroi (4) autour de ladite ouverture (3), en étant configuré pour assurer un maintien en position dudit conduit ou analogue (2) dans ladite ouverture (3) et pour obturer cette dernière autour du conduit (2), ledit dispositif de passage (1) comprenant un premier corps annulaire extérieur (5) et un deuxième corps annulaire intérieur (6) avec des axes médians respectifs (A5 et A6), ces deux corps (5 et 6) constituant le dispositif de passage (1) par assemblage mutuel avec engagement positif, et étant configurés pour être montés concentriquement, avec confusion des axes et avec maintien, sur l'extrémité du conduit (2) et pour réaliser un pincement de la paroi (4) entre eux, ce par l'intermédiaire de lèvres circonférentielles flexibles (5' et 6') respectives, prenant chacune appui sur l'une desdites faces interne et externe (4' et 4") de ladite paroi (4), autour de l'ouverture (3),
dispositif de passage (1) **caractérisé en ce que** le premier corps annulaire (5) comprend une partie radialement intérieure (5") en forme de manchon avec une région profilée (7) sur sa face interne, **en ce que** le deuxième corps annulaire (6) comprend une partie radialement intérieure (6") en forme de manchon avec une région profilée (8) sur sa face externe, ces deux régions (7 et 8) coopérant mutuellement avec chevauchement pour réaliser l'assemblage par engagement positif des deux corps annulaires (5 et 6), et **en ce que** ledit manchon intérieur (6") du deuxième corps annulaire (6) comprend des portions de paroi (9) élastiquement déformables, lesquelles sont sollicitées élastiquement et/ou par le manchon intérieur (5") du premier corps annulaire (5) pour venir en engagement bloquant ou verrouillant avec le conduit (2) à l'état assemblé des deux corps annulaires (5 et 6).

2. Dispositif selon la revendication 1, **caractérisé en ce que** les régions profilées (7 et 8) des parties radialement intérieures (5", 6") respectivement du premier (5) et du deuxième (6) corps annulaires sont des régions filetées, avec préférentiellement une région filetée continue formant la région profilée (7) du premier corps (5) et au moins trois régions filetées (7') intermittentes et réparties circonférentiellement autour de l'axe médian (A6) formant la région profilée (8) du deuxième corps (6), chaque région filetée intermittente (7') étant associée à une des portions de paroi (9) élastiquement déformables.

3. Dispositif selon la revendication 1, **caractérisé en ce que** la région profilée (7) de la partie radialement intérieure (5") du premier corps annulaire (5) comprend au moins trois dents (7'), avantageusement au moins trois groupes de dents (7'), réparties angulairement autour de l'axe médian (A5) et **en ce que** la région profilée (8) de la partie radialement intérieure (6") du deuxième corps annulaire (6) comprend au moins un cran (8') circonférentiel, lesdites dents (7') et ledit au moins un cran (8') coopérant mutuellement pour réaliser un assemblage par clipsage ou enclenchement élastique des deux corps (5 et 6) lors d'un chevauchement des deux régions profilées (7 et 8).

4. Dispositif selon l'une quelconque des revendications 1 à 3, **caractérisé en ce que** les portions de paroi (9) se présentent sous la forme de portions découpées dans le manchon intérieur (6") avec formation autour d'elles de passages traversants, et consistent avantageusement en des pattes situées dans des ajours (9') de la paroi dudit manchon intérieur (6"), en étant d'un seul tenant avec cette paroi et en étant pourvues de surépaisseurs d'appui ou d'accrochage (9"), préférentiellement au niveau de leurs extrémités libres.

5. Dispositif selon l'une quelconque des revendications 1, 2 et 4, **caractérisé en ce que** les portions de paroi (9), avantageusement au moins au nombre d'au moins trois et portant chacune une fraction de la région filetée externe (8) du manchon intérieur (6") du deuxième corps annulaire (6) et régulièrement réparties autour de son axe médian (A6), enserrent sous pression ledit conduit (2) entre elles par l'intermédiaire de surépaisseurs ou de formations protubérantes analogues (9") et sous l'effet d'une déformation élastique provoquée par le manchon intérieur (5") du premier corps annulaire (5) lors du vissage de ce dernier.

6. Dispositif selon l'une quelconque des revendications 1 à 4, **caractérisé en ce que** les portions de paroi (9), avantageusement au moins au nombre de trois, portant le cas échéant chacune une fraction de la région profilée externe (8) du manchon intérieur (6") du deuxième corps annulaire (6) et régulièrement réparties autour de son axe médian (A6), comportent des surépaisseurs ou des épaulements (9") venant en prise dans une gorge ou rainure (10) présente dans le conduit (2), préférentiellement par enclenchement élastique, le manchon intérieur (5") du premier corps annulaire (5) verrouillant ces engagements lors du vissage ou du clipsage de ce dernier sur le manchon intérieur (6") du deuxième corps annulaire (6).

7. Dispositif selon l'une quelconque des revendications 4 à 6, **caractérisé en ce que** le manchon intérieur (6") du deuxième corps annulaire (6) est positionné à distance de la face externe du conduit (2) par l'intermédiaire des surépaisseurs (9") venant en appui sur cette face.

8. Dispositif selon l'une quelconque des revendications 1 à 7, **caractérisé en ce que** le manchon intérieur (5") du premier corps annulaire (5) se prolonge radialement vers l'extérieur par un anneau de recouvrement (5‴) se terminant par la lèvre extérieure (5'), cet anneau de recouvrement (5‴) formant ensemble avec ledit manchon intérieur (5") attenant une structure annulaire avec une section sensiblement en forme de L dans un plan contenant l'axe médian (A5) dudit corps annulaire (5) et comprenant avantageusement des sites ou des formations (11) configurées pour la venue en prise d'un outil de vissage.

9. Dispositif selon l'une quelconque des revendications 1 à 8, **caractérisé en ce que** le deuxième corps annulaire (6) comprend une structure à double paroi, dans laquelle le manchon intérieur (6") se prolonge radialement vers l'extérieur, au niveau de son extrémité intérieure, en un second manchon externe (6‴) concentrique se terminant par la lèvre intérieure (6'), ladite structure présentant sensiblement une section en forme de U dans un plan contenant l'axe médian (A6) dudit deuxième corps annulaire (6) et le manchon intérieur (5") du premier corps annulaire (5) s'étendant entre ces deux manchons concentriques, donc entre les deux branches du U, à l'état assemblé des premier et deuxième corps annulaires du dispositif de passage (1).

10. Dispositif selon l'une quelconque des revendications 1 à 9, **caractérisé en ce que** le manchon intérieur (6") du deuxième corps annulaire (6) comporte un opercule (12) fermant l'ouverture d'une de ses extrémités et formant bouchon amovible, destiné à obturer l'ouverture de l'extrémité (2') du conduit (2) lorsque le deuxième corps annulaire (6) est monté sur ledit conduit (2).

11. Dispositif selon la revendication 10, **caractérisé en ce que** l'opercule (12) est formé d'un seul tenant avec le manchon intérieur (6") du deuxième corps annulaire (6), en étant relié à ce dernier par une zone de matière annulaire périphérique (12') à rupture privilégiée, par exemple de faible épaisseur, intermittente ou creusée.

12. Dispositif selon l'une quelconque des revendications 10 et 11, **caractérisé en ce que** l'opercule (12) comporte une lèvre ou aile circonférentielle intérieure (12"), configurée pour venir en appui sur la face interne de l'extrémité (2') du conduit (2) lorsque le deuxième corps annulaire (6) est monté sur ledit conduit (2).

13. Dispositif selon l'une quelconque des revendications 1 à 12, **caractérisé en ce que** le manchon intérieur (6") du deuxième corps annulaire (6) comporte, au niveau de l'ouverture d'une de ses extrémités, une butée annulaire (13), entourant le cas échéant un opercule (12) de fermeture de cette ouverture et destinée à venir en contact avec le bord de l'extrémité (2') du conduit (2) lorsque le deuxième corps annulaire (6) est monté sur ledit conduit (2).

14. Contenant (15) isolé thermiquement, en particulier ballon d'eau chaude, comprenant essentiellement un réservoir cylindrique (16), préférentiellement métallique, une paroi cylindrique (4) entourant ledit réservoir (16) et formant enveloppe d'habillage, éventuellement des couvercles ou capots de fermeture supérieur (17) et inférieur (17') obturant les ouvertures opposées de ladite enveloppe d'habillage cylindrique (4), et un matériau isolant moussé (18) remplissant sensiblement tout le volume interstitiel (19) entre le réservoir (16) et l'enveloppe (4) avec ses deux éventuels couvercles, ledit réservoir (16) comportant au moins un, préférentiellement plusieurs conduits de raccordement (2), pour l'alimentation et l'évacuation de fluide et/ou l'alimentation en énergie, ces conduits (2) traversant la couche de matériau isolant moussé (18) et la paroi (4) de l'enveloppe d'habillage de cette dernière au niveau d'ouvertures (3) prédécoupées,
contenant (15) **caractérisé en ce qu'**un dispositif de passage (1) selon l'une quelconque des revendications 1 à 11 est présent au niveau d'au moins une, de certaines ou de chacune desdites ouvertures (3) traversées par un conduit (2) correspondant.

15. Procédé de fabrication d'un contenant isolé thermiquement (15) selon la revendication 12, consistant essentiellement à fournir un réservoir (16) équipé de ses conduits de raccordement (2), une paroi (4) formant enveloppe d'habillage cylindrique et des couvercles supérieur (17) et inférieur (17'), à placer le réservoir (16) dans l'enveloppe (4) et à mettre en place les couvercles supérieur (17) et inférieur (17'), à installer l'ensemble préassemblé (15, 16, 17, 17') précité dans une station de moussage ou analogue, en la disposant par exemple entre deux plateaux presseurs, à injecter une quantité prédéterminée de mousse liquide (18'), à laisser la mousse s'expanser, de manière à obtenir une couche de matériau isolant moussé (18) dans l'ensemble du volume interstitiel (19) entre, d'une part, le réservoir (16) et, d'autre part, l'enveloppe d'habillage cylindrique (4) avec ses deux couvercles 17 et 17'), et à la laisser se polymériser, et, enfin, à retirer le contenant de la station ou analogue,
procédé **caractérisé en ce qu'**il consiste à mettre en place, avant l'injection de la mousse liquide (18'), au niveau d'au moins une, de certaines ou de chacune desdites ouvertures (3) traversées par un conduit (2) correspondant, un dispositif de passage (1) selon l'une quelconque des revendications 1 à 13. 1
